# EUROPÄISCHE PATENTANMELDUNG

(11) **EP 1 380 472 A1**
(43) Veröffentlichungstag der Anmeldung: **14.01.2004**
(21) Anmeldenummer: 03009273.8
(22) Anmeldetag: 24.04.2003
(51) Int. Cl.: B60R 16/02

(54) **Elektronik-Architektur für ein Verkehrsmittel**

(30) Priorität: 15.06.2002 DE 10226697
(71) Anmelder: DaimlerChrysler AG, 70567 Stuttgart (DE)
(72) Erfinder: Dohmeyer, Volker, 73732 Esslingen (DE); Hofmann, Peter, 71120 Grafenau (DE); Keydel, Martin, 73730 Esslingen-Zell (DE); Klenk, Udo, 70374 Stuttgart (DE); Leboch, Stefan, 72124 Pliezhausen (DE); Gislinde, Lukas, 72108 Rottenburg (DE); Müller, Axel, 73728 Esslingen (DE); Müller, Thomas, 74420 Oberrot (DE); Peraus, Alexander, 73066 Uhingen (DE); Sakretz, Robert, 71272 Renningen (DE); Schmidt, Ulrich, 72768 Reutlingen (DE); Schneider, Bernd, 73614 Schorndorf (DE); Wohlgemuth, Florian, 70193 Stuttgart (DE)

(57) **Zusammenfassung**

Ein Verkehrsmittel mit Steuergeräten und mindestens einem Datenbus (4) zur Vernetzung der Steuergeräte (1, 21), wobei die Steuergeräte (1, 21) zur Ansteuerung von Aktoren (15, 16) und Sensoren (17) Funktionen (9, 10, 11, 12) ausführen und dass autonome Einheiten (1, 15, 16, 17, 21) gebildet sind, die eine Ein-/Ausgabe-Schnittstelle und eine Wissensbasis (13) aufweisen, welche Informationen über mindestens einen zugelassenen Kommunikationspartner (16, 21), die eigene Funktion und zugelassene Ein- und Ausgabeformate beinhalten, wobei jede autonome Einheit (1, 15, 16, 17, 21) eine Teilfunktionalität einer zu steuernden Verkehrsmittelfunktion leistet.

## Beschreibung

Die Erfindung betrifft ein Verkehrsmittel mit Steuergeräten und mindestens einem Datenbus zur Vernetzung der Steuergeräte, wobei die Steuergeräte zur Ansteuerung von Aktoren und Sensoren Funktionen ausführen und dass autonome Einheiten gebildet sind, die eine Ein-/Ausgabe-Schnittstelle und eine Wissensbasis aufweisen, welche Informationen über mindestens einen zugelassenen Kommunikationspartner, die eigene Funktion und zugelassene Einund Ausgabeformate beinhalten, wobei jede autonome Einheit eine Teilfunktionalität einer zu steuernden Verkehrsmittelfunktion leistet. Außerdem ist ein entsprechendes Netzwerk für ein Verkehrsmittel mit mehreren Netzwerkkomponenten mit mindestens einem darauf ausführbaren Softwaremodul zur Steuerung von Funktionen im Verkehrsmittel beschrieben.

Eine derartige Elektronik-Architektur für ein Verkehrsmittel ist aus der DE 199 39 911 A1 bekannt. Dort sind verschiedene Steuergeräte über einen Datenbus miteinander vernetzt und auf den Steuergeräten läuft jeweils eine Softwareanwendung. Es ist ein Verfahren zur Datenübertragung zwischen einer ersten Anwendung auf dem ersten Steuergerät und einer zweiten Anwendung auf einem zweiten Steuergerät beschrieben. Die Verbindung erfolgt dabei vorzugsweise über einen optischen Datenbus. Die Anwendungen kommunizieren dabei mit auf der jeweils gleichen Recheneinheit vorgesehenen Stellvertreteranwendungen, ohne das spezielle busspezifische Befehle beachtet werden müssen. Bei der Kommunikation werden Daten aus der ersten Anwendung an die zweite Anwendung übertragen und dort weiterverarbeitet. Jeder Anwendung liegt eine Software zugrunde die Daten über eine Schnittstelle austauschen kann. Ein Problem bei derartigen Elektronik- und Software-Architekturen besteht darin, dass beim Ausfall einer Komponente oder einer Software, die gesamte Berechnung oder Anwendung ausfällt. Denn auf den Steuergeräten ablauffähige Softwaremodule sind zu einem Modulverbund durch einen Software-Linkprozess verbunden. Fällt nun eine Komponente mit einem Softwaremodul aus, so ist das gesamte System gestört und nicht mehr funktionsfähig bis die defekte Komponente oder das Softwaremodul ersetzt worden ist.

Die DE 199 09 157 A1 zeigt ein Fahrzeuginformationsverarbeitungssystem mit einem ersten Systemteil und wenigstens einem weiteren, zweiten Systemteil zur Ausführung einer oder mehrerer fahrzeugbezogener Anwendungsfunktionen. Die Systemteile weisen verschiedene Softwaremodule auf, die über ein zugehöriges Datenübertragungsnetzwerk miteinander kommunizieren. Die einzelnen Systemteile bilden einen komponentenbasierten Aufbau aus verschiedenen, miteinander kommunizierenden Softwaremodulen, wobei jedes eine Funktionsaufruf-Schnittstelle aufweist, über welche die von der Komponente ausgeführte Funktion von anderen Komponenten des selben oder eines anderen Systemteils aufrufbar ist. Eine Konfigurationsschnittstelle ist vorhanden, um die Konfigurationen der einzelnen Komponenten variabel festzulegen. Eine Konfigurationsmanagereinheit konfiguriert verschiedene Hardwaremodule zu einem Hardware-Modulverbund, so dass die geforderte Anwendung ausführbar ist. Durch den Konfigurationsmanager können einzelne Komponenten dynamisch zwischen den verschiedenen Systemteilen des Systems verlagert werden oder einzelne Komponenten können in Form von Anwendungsprogrammen auf dem Steuergerät nachgeladen werden. Der Konfigurationsmanager stellt dann die notwendigen Komponenten bereit, um neu installierte Komponenten in Betrieb zu nehmen.

Es ist Aufgabe der vorliegenden Erfindung, die Elektronikund/oder Software-Architektur in einem Verkehrsmittel derart weiterzubilden, dass bei einem Ausfall einzelner Komponenten automatisch eine Ersatzkomponente aufgefunden wird und das Gesamtsystem mit dieser Ersatzkomponente zusammenwirkt, bis die Fehler im System behoben sind.

Diese Aufgabe wird gemäß den Merkmalen des unabhängigen Anspruchs 1 gelöst. Dabei verbindet sich jede autonome Einheit beim Hochfahren des gesamten Systems mit einem bevorzugten zugeordneten Kommunikationspartner für eine Teilfunktionalität, um eine benötigte Verkehrsmittelfunktion ausführen zu können. Im Fehlerfall gibt die betroffene autonome Einheit bei Anforderung das Zusammenwirken mit dem fehlerhaften zugeordneten Kommunikationspartner auf und wirkt mit einer anderen alternativen autonomen Einheit entsprechend einer Taxonomiedarstellung zusammen, wobei eine Schnittstelle einer autonomen Einheit sich mit einer neuen Schnittstelle einer bisher nicht am Modulverbund angekoppelten autonomen Einheit über einen Linkprozess verbindet.

Gemäß der vorliegenden Erfindung ist in einem der Steuergeräte eine Taxonomiedarstellung vorgesehen, die für jede innerhalb des Netzwerks verwendete Hardware- bzw. Software-Komponente angibt, welche andere Komponente bei deren Ausfall die Ersatzfunktion übernehmen kann. Dazu weist jedes autonome System einen Verhaltensspeicher auf, in dem für jede Komponente Informationen über mindestens einen zugelassenen Kommunikationspartner, die eigene Funktion und zugelassene Ein- und Ausgabeformate abgespeichert sind. Jede autonome Komponente kann dann im Fehlerfall über die Taxonomiedarstellung ableiten, welches die für die fehlerhaften Kommunikationspartner zu verwendende Ersatzkomponente ist. Die Taxonomiedarstellung kann auch bei mehreren oder allen Steuergeräten vorgesehen sein oder eine Kopie einer Haupt-Taxonomiedarstellung kann beim Hochfahren des Systems in mehreren Steuergeräten abgelegt werden.

Die Taxonomiedarstellung ordnet jeder autonomen Einheit mehrere alternative Kommunikationspartner zu, beschreibt deren Funktion und Situation, in der der alternative Kommunikationspartner anstelle einer anderen autonomen Einheit zur Ausführung einer Funktion des Verkehrsmittels eingesetzt werden kann. In der Taxonomiedarstellung ist angegeben, welche alternative autonome Einheit zur Ausführung einer Funktion verwendet werden kann, wenn die bei normaler Funktion verwendete autonome Einheit, beispielsweise bei technischen Problemen, ausfällt. Eine autonome Einheit kann dabei eine Hardwarekomponente mit Schnittstellen sein, beispielsweise ein Steuergerät, oder lediglich ein Softwaremodul, das bei Ausfall eines Steuergerätes ersetzt werden muss. Beispielsweise bei einem Steuergerätefehler und dem damit verbundenen Ausfall eines Sensors kann eine autonome Einheit über die Taxonomiedarstellung nach einem alternativen Kommunikationspartner und alternativen Sensoren suchen und einen Linkprozess durchführen, um mit der alternativen autonomen Einheit die Funktion im Verkehrsmittel durchzuführen.

Beim Hochfahren des vernetzten Systems im Verkehrsmittel werden die einzelnen autonomen Einheiten gemäß der Taxonomiedarstellung bei Standardbedingungen konfiguriert, wobei die Schnittstellen und Variablen derart in den Softwaremodulen angepasst werden, dass eine Kommunikation der vorgesehenen autonomen Einheiten erfolgen kann. Bei einer Fehlfunktion erfolgt die Anforderung einer alternativen autonomen Einheit, insbesondere ein Steuergerät, ein Aktor oder ein Sensor, wodurch eine Neukonfiguration des Systems erfolgt, wobei zumindest ein Linkprozess zwischen verschiedenen autonomen Einheiten durchgeführt wird. Nach der Neukonfiguration ist zumindest ein alternativer Kommunikationspartner entsprechend der Taxonomiedarstellung in Bezug auf die Standardkonfiguration des Systems ausgetauscht. Dabei kann durchaus ein Steuergerät einerseits über den Normalprozess mit einem ersten Steuergerät kommunizieren und zusätzlich beispielsweise in einem Zeit- oder Frequenzmultiplexverfahren eine Funktion für eine ausgefallene Komponente erfüllen.

Die Taxonomiedarstellung zeigt mögliche zulässige Verknüpfungen zwischen den einzelnen autonomen Einheiten, insbesondere Steuergeräten oder Softwaremodulen, zur Erfüllung einer Teilfunktion. Teile der Taxonomiedarstellung werden bei einer Konfiguration des Systems in den Speicher ausgewählter autonomer Einheiten heruntergeladen, so dass bei Ausfall einzelner Komponenten jede autonome Einheit ihren Kommunikationspartner selbst findet.

Jeder autonomen Einheit ist ein Speicherbereich als Wissensbasis zugeordnet, in der eine Prioritätenfolge für alternativ zulässige Kommunikationspartner abgelegt ist. Die höchste Priorität hat dabei ein für den Standardbetrieb des Systems bevorzugt zugeordneter Kommunikationspartner für eine bestimmte Teilfunktionalität. Die zweithöchste Priorität hat dann ein erster alternativ zulässiger Kommunikationspartner, der beim Ausfall des höchstprioren Kommunikationspartners an dessen Stelle tritt. Kommunikationspartner können dabei sowohl Hardware-Einheiten als auch Software-Einheiten sein, wobei jeweils vorgesehen ist, dass ein Kommunikationspartner im Notfall selbsttätig aufgefunden werden kann.

Eine autonome Einheit ist spezialisiert, auf eine der folgenden Teilfunktionen: Bedienelementesteuerung, Anzeigesteuerung, Sensor-/Aktorsteuerung, Systemdiagnose, Verkehrsmittelfunktion, Teilprozessbezeichnung oder Fahrerinformationsausgabe im Fehlerfall. Die Wissensbasis, d.h. der einer autonomen Einheit zugeordnete Speicherbereich, enthält Informationen darüber, welche andere autonome Einheit im Fehlerfall die ausgefallene Teilfunktion übernehmen kann. Dazu wird ein Teil der Taxonomiedarstellung als Wissensbasis in den Speicherbereich jeder autonomen Einheit bei der Konfiguration des Systems heruntergeladen.

Die vorliegende Aufgabe wird auch durch die Merkmale des unabhängigen Anspruchs 7 gelöst. Danach ist ein Netzwerk im Verkehrsmittel mit mehreren Netzwerkkomponenten jeweils mit einem Mikrorechner und mindestens einem darauf ausführbaren Softwaremodul zur Steuerung von Funktionen im Verkehrsmittel ausgestattet. Das Netzwerk ist ein Datenbus und die Netzwerkkomponenten entweder ein Steuergerät oder Sensoren und Aktoren. Jede Netzwerkkomponente weist Schnittstellen zum Netzwerk auf. Die Netzwerkkomponente tauscht über die Schnittstellen Daten mit anderen Softwaremodulen auf anderen Netzwerkkomponenten aus. Jedes Softwaremodul bildet dabei eine autonome Einheit, die während der Programmlaufzeit durch einen Software-Linkprozess mit anderen Softwaremodulen zu einem Modulverbund wirkverbunden werden kann. Dieser Modulverbund führt dann eine Steuerfunktion im Verkehrsmittel aus.

Erfindungsgemäß weist die Netzwerkkomponente einen Verhaltensspeicher auf, in der die Wissensbasis für ein Softwaremodul abspeicherbar ist. Die Wissensbasis besteht aus Informationen über Funktionen, notwendige Eingangs- und Ausgangsdaten und erforderliche andere Softwaremodule zur Durchführung der Steuerfunktionen. Aufgrund der aus der von der Taxonomiedarstellung in die Wissensbasis geladenen Informationen erkennt das Softwaremodul die anderen notwendigen Softwaremodule für die auszuführende Steuerfunktion im Verkehrsmittel. Ein nicht notwendiges oder nicht funktionsfähiges Softwaremodul kann bei Bedarf aus dem Modulverbund entfernt werden und ein neu ausgewähltes anderes Softwaremodul wird dann über eine Software-Linkprozess mit den übrigen Softwaremodulen des Modulverbundes verbunden. Auf diese Weise kann bei Ausfall einer Komponente mit einem normalerweise notwendigen Softwaremodul ein alternatives Softwaremodul zur Ausführung der Steuerfunktion aufgefunden werden. Durch den Software-Linkprozess lässt sich während des Fahrzeugeinsatzes eine alternative autonome Komponente, insbesondere ein Softwaremodul, auffinden, welches alternativ zum ausgefallenen Softwaremodul die Teilfunktion unterstützen kann.

Ein Vorteil der dargestellten technischen Lehre besteht darin, dass bei Ausfall von Elektronikkomponenten, während des Fahrzeugeinsatzes eine Fehlerroutine gestartet werden kann, die unter Verwendung einer alternativen autonomen Einheit und unter Ausführung eines Software-Linkprozesses den Modulverbund neu zusammenstellt, so dass die ausgefallene autonome Einheit ersetzt wird und die Teilfunktion im Verkehrsmittel vorübergehend oder dauerhaft ausführbar ist.

Die Taxonomiedarstellung gibt dazu mehrere Möglichkeiten an, über die eine ausgefallene autonome Einheit ersetzt werden kann. Infolgedessen kann auch ein Notbetrieb von elektronischen Komponenten durchgeführt werden, wenn mehrere Teile eines Datenbussystems gleichzeitig ausfallen.

Autonome Einheiten sind erfindungsgemäß Steuergeräte, ein Datenbus oder Softwaremodule, jeweils mit zugeordneter Wissensbasis. Sämtliche autonome Einheiten können sich zur Laufzeit in Organisationseinheiten verbinden und zusammenwirken. Die Selbstorganisation während der Laufzeit stellt eine bisher bei Verkehrsmitteln, bspw. Kraftfahrzeugen, nicht vorgesehene Fehlerbehandlungsmöglichkeit dar. Bei den konventionellen Systemen sind Softwaremodule über einen Linkprozess fest verbunden, so dass die Schnittstellen der einzelnen Softwaremodule unveränderbar sind und lediglich unterschiedliche Funktionen der Softwaremodule aufgerufen werden. Im Gegensatz dazu ist beim erfindungsgemäßen Ansatz mit den autonomen Einheiten vorgesehen, während der Laufzeit des elektronischen Systems die am Modulverbund beteiligten Einheiten umzuorganisieren. Dabei werden Softwaremodule und Hardwareeinheiten während der Laufzeit in Bezug auf deren Schnittstellen getrennt und neu durch einen Linkprozess verbunden. Der Aufbau der Verbindungen wird durch den Taxonomiebaum unterstützt. Es kann dabei vorgesehen sein, dass einzelne autonome Einheiten eine aktive Rolle beim Linkprozess innehaben und weitere passive autonome Einheiten dem Modulverbund hinzufügen.

Jede autonome Einheit weist eine Wissensbasis auf, in der das Verhalten, die Bedienung, die Anzeige und der Funktionsablauf sowie die Informationen über andere Kommunikationspartner beschrieben sind. Aufgrund der Informationen der Wissensbasis kann eine aktive autonome Einheit bei Bedarf einen Ersatzkommunikationspartner bestimmen. Die Kommunikationspartner können entweder Hardwaremodule wie Steuergeräte, Datenbussegmente, Sensoren und Aktoren oder Softwaremodule sein.

Der Linkprozess kann durch eine spezielle Abfragenachricht gestartet werden, beispielsweise "Kommunikationspartner mit folgender Schnittstelle und Funktionen gesucht", wobei entsprechend der Taxonomiedarstellung die Abfragenachricht an die autonomen Einheiten mit geringerer Priorität gesendet werden. Die zu den notwendigen Kommunikationsbedingungen fähigen autonomen Einheiten quittieren dann diese Abfragenachricht und die aktive, anfordernde Einheit entscheidet anhand der Wissensbasis welcher der möglichen Kommunikationspartner ausgewählt wird und startet einen Linkprozess-Generator, der die Schnittstellen zunächst auf deren Eignung zur Kommunikationsverbindung prüft und daraufhin die alte Kommunikationsverbindung mit der nicht mehr benötigten autonomen Einheit trennt und die Schnittstellen der beiden neuen Kommunikationspartner durch einen Linkprozess verbindet. Nach dem Linkprozess lassen sich dann über die Schnittstelle die notwendigen Ersatzfunktionen zur Ausführung der Teilfunktionalität aufrufen.

Das Verfahren mit der Erzeugung von Kommunikationsverbindungen während der Laufzeit lässt sich einerseits zur Fehlerbehandlung und andererseits auch bei Nachrüstungen mit neuen Modulen verwenden. Auf diese Weise können neue autonome Einheiten und eine überarbeitete Taxonomieeinheit einem Modulverbund zur Verfügung gestellt werden, wodurch dann neue Treiber und neue Hardwareinterfaces in das System eingebunden werden können.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform der Erfindung dargestellt. Es zeigen jeweils in schematischer Darstellung,

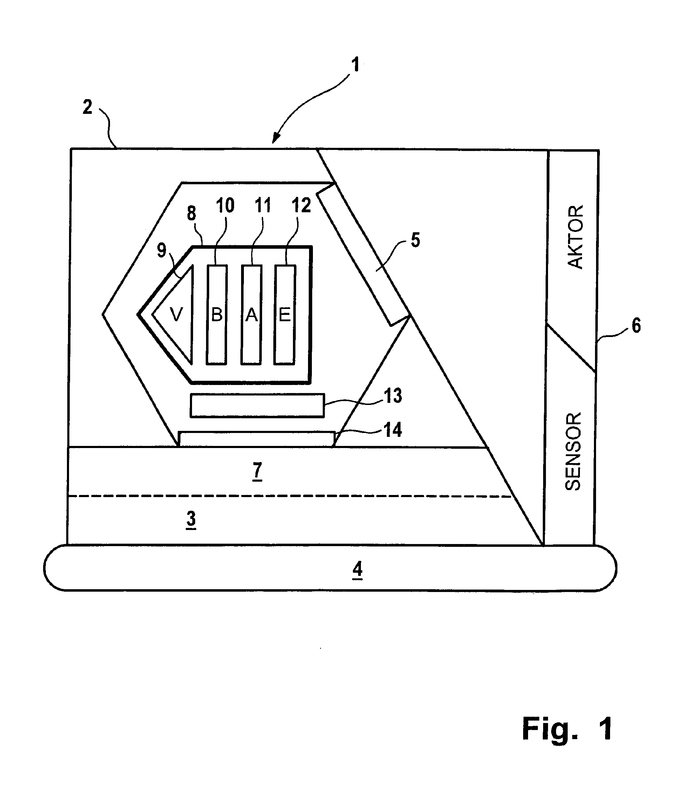

- Fig. 1: eine Darstellung einer autonomen Einheit gemäß der vorliegenden Erfindung und
- Fig. 2: die Darstellung eines Netzwerks in einem Verkehrsmittel beim Software-Linkprozess gemäß vorgegebener Taxonomiedarstellung.

Eine autonome Einheit 1 weist ein Steuergerät 2 auf, das über eine Netzwerkschnittstelle 3 mit einem Datenbus 4 kommunikationsfähig verbunden ist. Das Steuergerät 2 weist ein Geräteportal 5 auf, um mit einem peripheren Gerät 6, insbesondere ein Sensor oder Aktor im Verkehrsmittel, verbindbar zu sein. Das Steuergerät 2 ist mit einem Betriebssystem, der sogenannten Middleware 7 ausgestattet, welches die Basis für die Diagnose, Anwendungs- und Fehlerbehandlungsprozesse bildet. Ein Softwareportal 8 weist Schnittstellen zu Softwaremodulen 9 - 12 auf, die in Bezug auf eine zu steuernde Verkehrsmittelfunktion Teilfunktionen ausführen.

Das Softwaremodul 9 weist Steueralgorithmen auf, das Softwaremodul 10 weist Treiber und Funktionen bezüglich der Bedienung im Fahrzeug, das Softwaremodul 11 Treiber und Funktionen bezüglich der Anzeige im Fahrzeug und das Softwaremodul 12 weist Diagnose und Fehlerbehandlungsfunktionen für den aus der Softwaremodulen 9 - 12 bestehenden Modulverbund auf. In der Wissensbasis 13 sind aus der Taxonomiedarstellung für den gesamten Datenbus 4 mit allen autonomen Einheiten 1 die für die spezielle autonome Einheit 1 relevanten Informationen für den Ausfall der autonomen Einheit bzw. eines Teils der autonomen Einheit 1 abgespeichert. Die Wissensbasis 13 ist mit einem Kommunikationsportal 14 verbunden, um über den Datenbus 4 mit weiteren autonomen Einheiten kommunizieren zu können.

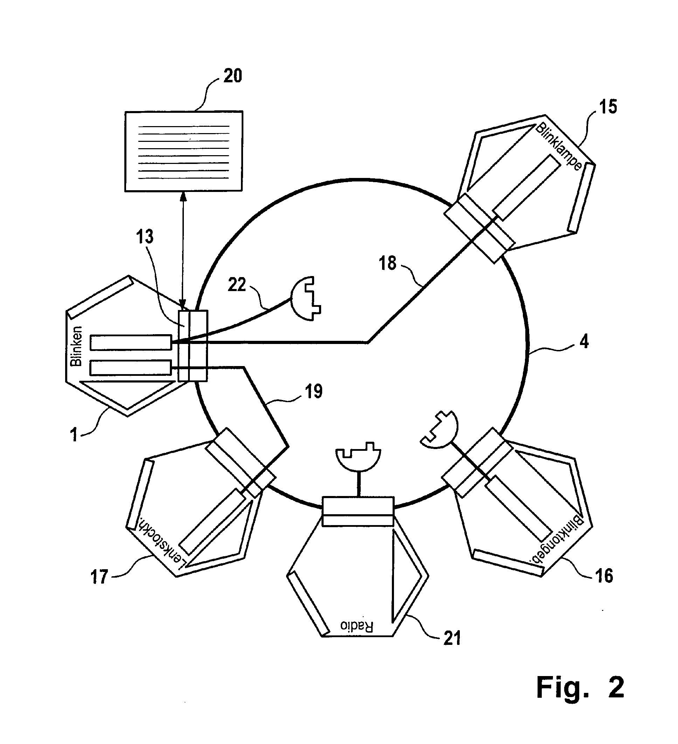

In Figur 2 ist der Datenbus 4 mit den autonomen Einheiten 1, 15, 16 und 17 dargestellt. Die autonomen Einheit 1 ist im Beispiel ein Steuergerät zur Durchführung des Teilprozesses Blinken im Kraftfahrzeug. Das Steuergerät hat dabei während der Normalkonfiguration beim Hochfahren des Datenbussystems 4 eine Kommunikationsverbindung 18 mit dem Aktor Blinklampe 15 hergestellt und zusätzlich ist eine Kommunikationsverbindung 19 mit der autonomen Einheit 17 hergestellt, die als Bedieneinheit einen Lenkstockhebel am Lenkrad des Kraftfahrzeugs darstellt. Beim vorliegenden Ausführungsbeispiel ist ein erster Blinktongeber 16 wegen einer Fehlfunktion ausgefallen und die autonome Einheit 1 sucht mittels Linkprozess 22 entsprechend der aus der Taxonomiedarstellung 18 in die Wissensbasis 13 heruntergeladenen Darstellung ersatzweise Kommunikationspartner, die alternativ für den Blinktongeber 16 verwendbar sind. Dazu verbindet sich die autonome Einheit 1 mit der autonomen Einheit 17, welche ein Autoradio ist und bei Fehlfunktion des Blinktongebers 16 zur akustischen Darstellung der Blinksignale vorgesehen ist. Eine Notfunktion des Radios erzeugt dabei Blinksignale, die über das Autoradio im Fahrzeug ausgegeben werden. Gleichzeitig wird die Fehlfunktion des Blinktongebers 16 über das Softwaremodul 11 innerhalb des Fahrzeugs angezeigt. Nach Ersatz des defekten Blinktongebers 16 kann dann bei einer normalen Konfiguration des Modulverbundes wieder der ursprünglich vorgesehene Blinktongeber 16 beim Software-Linkprozess zum Einsatz kommen.

Das erfindungsgemäße Konzept mit autonomen Einheiten und der Auswahl von Ersatzkomponenten auf Grund einer Taxonomiedarstellung wurde anhand des Blinkprozesses innerhalb eines Kraftfahrzeugs vereinfacht dargestellt. Die Erfindung betrifft verteilte Datenbussysteme und insbesondere die Fehlerbehandlung bei Kraftfahrzeugen, Bahn- und Flugzeugen. Über das Konzept der autonomen Einheiten 1, 15, 16, 17 lassen sich insbesondere Fehlfunktionen komplexer elektronischer Steuergeräte am Datenbus 4 behandeln. Dazu gehören Teilfunktionen bei sicherheitsrelevanten Systemen wie Bremsen, Lenken, Motorfunktionen. Ferner können Funktionen der Lichttechnik und Bedien- und Anzeigeelemente innerhalb des Kraftfahrzeugs im Fehlerfall durch andere Komponenten ersetzt werden. Dazu ist in der Taxonomiedarstellung 20 für jede autonome Einheit 1, 15, 16, 17 und 21 innerhalb des Verkehrsmittels eine Ersatzeinheit mit deren bereitgestellten Funktionen und den notwendigen Schnittstellen Daten dargestellt, so dass diese ersatzweise durch den Software-Linkprozess im Modulverbund berücksichtigt werden kann.

## Patentansprüche

1. Verkehrsmittel mit Steuergeräten und mindestens einem Datenbus (4) zur Vernetzung der Steuergeräte (1, 21), wobei die Steuergeräte (1, 21) zur Ansteuerung von Aktoren (15, 16) und Sensoren (17) Funktionen (9, 10, 11, 12) ausführen und dass autonome Einheiten (1, 15, 16, 17, 21) gebildet sind, die eine Ein-/Ausgabe-Schnittstelle (3, 5) und eine Wissensbasis (13) aufweisen, welche Informationen über mindestens einen zugelassenen Kommunikationspartner (16, 21), die eigene Funktion und zugelassene Ein- und Ausgabeformate beinhalten, wobei jede autonome Einheit (1, 15, 16, 17, 21) eine Teilfunktionalität einer zu steuernden Verkehrsmittelfunktion leistet, **dadurch gekennzeichnet, dass**
jede autonome Einheit (1, 15, 16, 17, 21) sich beim Hochfahren des Systems (1, 4) mit einem bevorzugten zugeordneten Kommunikationspartner (15, 16, 17) für die Teilfunktionalität verbindet, um die benötigte Verkehrsmittelfunktion ausführen zu können, und dass eine autonome Einheit (21) bei Anforderung das Zusammenwirken mit dem zugeordneten Kommunikationspartner aufgibt und entsprechend einer Taxonomiedarstellung (20) mit einer alternativen autonomen Einheit (21) zusammenwirkt, wobei eine Schnittstelle einer autonomen Einheit sich mit einer neuen Schnittstelle einer bisher nicht am Modulverbund angekoppelten autonomen Einheit über einen Linkprozess (22) verbindet.

2. Verkehrsmittel nach Anspruch 1, **dadurch gekennzeichnet, dass** eine Taxonomiedarstellung (20) jeder autonomen Einheit (1, 15, 16, 17, 21) mehrere alternative Kommunikationspartner (16, 21) zuordnet, deren Funktion und das Umfeld beschreibt, in der der alternative Kommunikationspartner (21) anstelle einer anderen autonomen Einheit (16) zur Ausführung einer Teilfunktion des Verkehrsmittels eingesetzt werden kann.

3. Verkehrsmittel nach einem der Ansprüche 1 oder 2, **dadurch gekennzeichnet, dass** bei einer Fehlfunktion einer autonomen Einheit (16), eines Aktors (15) oder Sensors oder bei einer Neukonfiguration des Systems auf Anforderung einer autonomen Einheit (1) die Kommunikation zu einer weiteren autonomen Einheit (21) erstellbar ist.

4. Verkehrsmittel nach einem der vorhergehenden Ansprüche, **dadurch gekennzeichnet, dass** eine autonome Einheit auf eine der Teilfunktionen Bedienelementesteuerung, Anzeigesteuerung, Sensor-/Aktorsteuerung, Systemdiagnose oder Fahrerinformationsausgabe spezialisiert ist, wobei die Wissensbasis (13) der autonomen Einheit (1) Informationen darüber enthält, welche anderen autonomen Einheiten (16, 21) die übrigen Teilfunktionen wie Bedienelemente, Steuerung, Anzeige usw. im Fehlerfall behandeln.

5. Netzwerk in einem Verkehrsmittel mit mehreren Netzwerkkomponenten (1, 4, 15, 16, 17, 21) jeweils mit einem Mikrorechner und mindestens einem darauf ausführbaren Softwaremodul (9, 10, 11, 12) zur Steuerung von Funktionen im Verkehrsmittel, wobei die Netzwerkkomponente 1 Schnittstellen zum Datenbus (4) und/oder zu Sensoren/Aktoren (6, 15, 16, 17, 21) aufweist, über die das Softwaremodul (9, 10, 11, 12) Daten mit anderen Softwaremodulen auf andere Netzwerkkomponente (21) austauscht, und wobei das Softwaremodul (9, 10, 11, 12) während der Programmlaufzeit mit anderen Softwaremodulen zu einem Modulverbund durch einen Software-Linkprozess (22) verbindbar ist, so dass der Modulverbund zur Steuerung von Funktionen im Verkehrsmittel zusammenwirkt, **dadurch gekennzeichnet, dass** eine Netzwerkkomponente einen Verhaltensspeicher (13) aufweist, in dem Informationen über die Funktion, notwendige Eingangsdaten, Ausgangsdaten und erforderliche andere Softwaremodule (9, 10, 11, 12) abgelegt sind, so dass ein Softwaremodul (9, 10, 11, 12) aufgrund der im Verhaltensspeicher (13) zu den anderen Softwaremodulen abgelegten Daten ein mögliches anderes Softwaremodul (9, 10, 11, 12) für das Zusammenwirken in Bezug auf die Steuerung einer Funktion im Verkehrsmittel erkennt, ein nicht mehr benötigtes oder nicht funktionsfähiges anderes Softwaremodul im Modulverbund entfernt und ein neues ausgewähltes anderes Softwaremodul (21) durch einen Software-Linkprozess (22) mit den übrigen Softwaremodulen des Modulverbundes verbindbar ist.

6. Taxonomiedarstellung für ein Netzwerk oder ein Verkehrsmittel gemäß einem der vorhergehenden Ansprüche, die mögliche zulässige Verknüpfungen zwischen den einzelnen autonome Einheiten (1, 15, 16, 17, 21) zur Erfüllung einer Teilfunktion aufzeigt, und dass Teile der Taxonomiedarstellung (20) bei einer Normalkonfiguration des Systems in die Wissensbasis (13) ausgewählter autonomer Einheiten (1, 21) heruntergeladen werden.

7. Taxonomiedarstellung nach Anspruch 6, **dadurch gekennzeichnet, dass** zu jeder autonomen Einheit (1, 15, 16, 17, 21) ein alternativ zulässiger Kommunikationspartner mit einer Prioritätenreihenfolge zugeordnet ist, diese Prioritätenreihenfolge zusammen mit der Wissensbasis (13) zu der autonomen Einheit ablegbar ist, um im Standardbetrieb des Systems einen bevorzugten zugeordneten Kommunikationspartner (16) für die Teilfunktionalität festzulegen und auf Anforderung zwischen den zulässigen Kommunikationspartner (16, 21) auszuwählen.
